# EUROPEAN PATENT APPLICATION

(11) **EP 3 202 744 A1**
(43) Date of publication of application: **09.08.2017**
(21) Application number: 16290026.0
(22) Date of filing: 05.02.2016
(51) Int. Cl.: C04B 28/04, C09K 8/467

(54) **WELL CEMENTING COMPOSITIONS AND METHODS**

(71) Applicant: Services Pétroliers Schlumberger, 75007 Paris (FR); Schlumberger Technology B.V., 2514 JG The Hague (NL)
(72) Inventor: Michaux, Michel, 92140 Clamart (FR); Caritey, Jean-Philippe, 92140 Clamart (FR); Beaudy, Pierre, 92140 Clamart (FR)
(74) Representative: Leonori, Céline

(57) **Abstract**

A well cementing composition that includes water, portland cement, a retarder and colloidal amorphous silica, present at a concentration between 0.2% and 1.0% by weight of cement. When added at such concentrations, the colloidal amorphous silica behaves as a retarder aid at bottomhole circulating temperatures exceeding 100°C. Methods for employing these compositions in well cementing operations are also disclosed.

## Description

### BACKGROUND

The statements in this section merely provide background information related to the present disclosure and may not constitute prior art.

This disclosure relates to cement compositions and methods for designing the compositions.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected. The tubular body is normally secured in the well by a cement sheath.

The cement sheath is usually placed in the annular region between the outside of the tubular body and the subterranean borehole wall by pumping the cement slurry down the interior of the tubular body, which in turn exits the bottom of the tubular body and travels up into the annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is important because it prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole is necessary to prevent leaks.

Optimal cement-sheath placement often requires that the cement slurry contains a retarder. Cement retarders delay the setting of the cement slurry for a period sufficient to allow slurry mixing and slurry placement in the annular region between the casing and the borehole wall, or between the casing and another casing string.

A wide range of chemical compounds may be employed as cement retarders. The most common classes include lignosulfonates, cellulose derivatives, hydroxycarboxylic acids, saccharide compounds, organophosphonates and certain inorganic compounds such as sodium chloride (in high concentrations) and zinc oxide. A more complete discussion of retarders for well cements may be found in the following publication-Nelson EB, Michaux M and Drochon B: "Cement Additives and Mechanisms of Action," in Nelson EB and Guillot D. (eds.): Well Cementing (2nd Edition), Schlumberger, Houston (2006) 49-91.

Certain types of retarders have been blended with other compounds to extend their useful temperature range, improve cement-slurry properties, or both. For example, the useful temperature range of certain lignosulfonate retarders may be extended by adding sodium tetraborate decahydrate (borax) as a retarder aid. Sodium gluconate may be blended with a lignosulfonate and tartaric acid to improve the rheological properties of the cement slurry. Thus, a myriad of retarders and retarder blends exist which may be applicable to a wide range of subterranean-well conditions.

### SUMMARY

The present disclosure describes improved compositions and methods for well cementing in which colloidal amorphous silica (CAS) is employed as a retarder aid.

In an aspect, embodiments relate to compositions. The compositions comprise water, portland cement, a retarder and CAS. The CAS is present at a concentration between 0.2% and 1.5% by weight of cement.

In a further aspect, embodiments relate to methods for cementing a subterranean well. A cement slurry is prepared that comprises water, portland cement, a retarder and CAS. The CAS is present at a concentration between 0.2% and 1.5% by weight of cement. The slurry is then placed in the well. During placement the slurry is exposed to a temperature exceeding 100°C.

In yet a further aspect, embodiments relate to methods for treating a subterranean well. A cement slurry is prepared that comprises water, portland cement, a retarder and CAS. The CAS is present at a concentration between 0.2% and 1.5% by weight of cement. The slurry is then placed in the well. During placement the slurry is exposed to a temperature exceeding 100°C.

This summary is provided to introduce a selection of concepts that are further described below in the detailed description. This summary is not intended to identify key or essential features of the claimed subject matter, nor is it intended to be used as an aid in limiting the scope of the claimed subject matter.

### DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. The term about should be understood as any amount or range within 10% of the recited amount or range (for example, a range from about 1 to about 10 encompasses a range from 0.9 to 11). Also, in the summary and this detailed description, it should be understood that a concentration range listed or described as being useful, suitable, or the like, is intended that any concentration within the range, including the end points, is to be considered as having been stated. For example, "a range of from 1 to 10" is to be read as indicating each possible number along the continuum between about 1 and about 10. Furthermore, one or more of the data points in the present examples may be combined together, or may be combined with one of the data points in the specification to create a range, and thus include each possible value or number within this range. Thus, even if specific data points within the range, or even no data points within the range, are explicitly identified or refer to a few specific, it is to be understood that inventors appreciate and understand that any data points within the range are to be considered to have been specified, and that inventors possessed knowledge of the entire range and the points within the range.

Silica may be found in nature in crystalline form (e.g., quartz sand). Amorphous silica, on the other hand, is industrially manufactured in a variety of forms, including silica gels, precipitated silica, fumed silica and colloidal silica. A colloid is a stable dispersion of particles-particles that are sufficiently small that gravity does not cause them to settle, yet are too large to pass through a membrane that allows other molecules and ions to pass freely. The particle size ranges from about 1 nm to 100 nm and the specific surface area exceeds 100 m²/g. Colloidal silica varies from other types of silica in several significant ways. The most noticeable difference is that it occurs in the form of a liquid suspension as opposed to a powder. Colloidal silica consists of dense, amorphous SiO₂ particles. The particles consist of randomly distributed SiO₄ tetrahedra. In this application, this material shall be referred to as colloidal amorphous silica (CAS).

CAS has properties that are of interest in the context of highly alkaline portland cement slurries. The surface of the silica particles is composed of silanol groups that are hydrolyzed at high pH. The isoelectric point of silica is 2. In cement slurries, the calcium ions adsorb onto the hydrolyzed silanol group, conferring a positive charge at the surface of the silica particles. Most cement additives are negatively charged (e.g., lignosulfonates, polynaphthalene sulfonate (PNS), organophosphonates, etc.); therefore, they can adsorb onto the positively charged silica particles. For example, it has been shown that, in a high-pH aqueous solution containing calcium hydroxide, about 400 mg of PNS can adsorb onto 1 g of CAS, whereas only about 4 mg of PNS can adsorb onto 1 g of Class G portland cement. Such measurements were conducted after 30 minutes of conditioning in an atmospheric consistometer at 25°C. Due to this adsorption differential, one having ordinary skill would likely believe that higher retarder concentrations would be necessary to achieve a given degree of retardation when CAS is present in the slurry.

However, Applicant has determined that a higher degree of retardation (i.e., longer thickening times) may be obtained at elevated temperatures (above about 100°C) when CAS is present at low concentrations-between 0.2% and 1.0% by weight of cement (BWOC)-along with a cement retarder. In other words, CAS may function as a retarder aid.

Similarly to what has been observed with polysilicate ions (e.g., aqueous solutions of sodium silicate having SiO₂-to-Na₂O molar ratios higher than 2), CAS may decrease the hydration rates of the calcium aluminates (C₃A and C₄AF) in portland cement and increase the hydration rates of the calcium silicates (C₃S and C₂S). In cement chemistry notation, C = CaO, A = Al₂O₃, S = SiO₂ and F = Fe₂O₃. Without wishing to be held to any particular theory, portland cement hydration may be primarily governed by the calcium silicates at temperatures up to about 100°C, whereas the calcium aluminates dominate at higher temperatures. The present inventors believe this may explain why CAS behaves as a hydration accelerator at temperatures below about 100°C and, at concentrations lower than 1.0% BWOC, acts synergistically with cement retarders at high temperatures. It is important to note that, even at temperatures exceeding 100°C, concentrations of CAS higher than 1.0% may have an accelerating effect because calcium silicate hydration may become dominant.

For all aspects, the CAS may have a median particle size between 1 nm and 100 nm, or between 5 nm and 50 nm or between 7 nm and 10 nm.

For all aspects, the retarder may comprise one or more members of the group consisting of sodium glucoheptonate, lignin amine, sodium pentaborate, potassium pentaborate, calcium lignosulfonate, calcium gluconate, an organophosphonate, calcium glucoheptonate, sodium lignosulfonate, sodium gluconate, sodium tartrate and tartaric acid.

For all aspects, the retarder may comprise one or more of the following retarders: (i) a mixture of sodium glucoheptonate and a lignin amine; (2) a mixture of sodium pentaborate and an organophosphonate; (3) calcium glucoheptonate; and (4) a mixture of sodium lignosulfonate, sodium gluconate and tartaric acid. The organophosphonates may include ethylenediamine tetramethylene phosphonic acid (EDTMP), aminotrimethylene phosphonic acid, 1-hydroxyethylidene, 1,1-diphosphonic acid, hexamethylenediaminetetra (methylene phosphonic acid), diethylenetriaminepenta (methylenephosphonic acid) and 2-phosphono-butane-tricarboxylic acid-1,2,4. The organophosphonates may be present in their acid forms or as salts.

For all aspects, the mixture of sodium glucoheptonate and the lignin amine may be present at a concentration between 0.1% and 2.0% by weight of cement or between 0.1% and 1.0% by weight of cement. The mixture of sodium pentaborate and the organophosphonate (a solution containing 8.7 wt.% sodium pentaborate and 1.3 wt.% EDTMP) may be present at a concentration between 30 L/tonne of cement and 250 L/tonne of cement, or between 50 L/tonne of cement and 100 L/tonne of cement. Calcium glucoheptonate (in the form of an 18 wt.% solution) may be present at a concentration between 5 L/tonne of cement and 100 L/tonne of cement, or between 5 L/tonne of cement and 50 L/tonne of cement. The mixture of sodium lignosulfonate, sodium gluconate and tartaric acid may be present at a concentration between 0.1 % and 2.0% by weight of cement or between 0.1 % and 1.0% by weight of cement.

For all aspects, the composition may further comprise styrene-butadiene latex (45% solids), or a copolymer of 2-acrylamido-2-methylpropane sulfonic acid (AMPS) and acrylamide, or a combination thereof. The styrene butadiene latex may be present at a concentration between 80 L/tonne of cement and 300 L/tonne of cement or between 200 L/tonne of cement and 300 L/tonne of cement. The AMPS/acrylamide copolymer may be present at a concentration between 0.2% and 0.7% by weight of cement.

For all aspects, the composition may further comprise crystalline silica at a concentration between 20% and 100% by weight of cement.

For all aspects, the composition may further comprise extenders, weighting agents, lost-circulation materials, dispersants, fluid-loss additives, antifoam agents, gas migration control agents, surfactants and gas generating agents.

The foregoing is further illustrated by reference to the following examples, which are presented for purposes of illustration and are not intended to limit the scope of the present disclosure.

### EXAMPLES

Cement slurries were prepared and tested according to the recommended practice specified by the American Petroleum Institute (RP 10B). The cement was Dyckerhoff Class G, and all slurries were prepared at a density of 1900 kg/m³ (15.8 lbm/gal). Tap water was the mixing fluid, and all additives except silica flour were added to the water before slurry preparation. The silica flour was dry blended with the cement.

The cement slurries were mixed in a Waring blender for 35 seconds at 12,000 RPM. Thickening times were measured in a pressurized consistometer. The consistometer was programmed to reach the final bottomhole circulating temperature (BHCT) and pressure in 90 minutes after the tests commenced. The thickening time is defined as the time at which the slurry reaches a consistency of 100 Bearden units (Bc).

### EXAMPLE 1

The base cement slurry composition was Class G cement, 35% silica flour (BWOC), 4.44 L/tonne of cement silicone antifoam, 0.5% BWOC blend of sodium glucoheptonate and lignin amine, 0.5% BWOC blend of sodium lignosulfonate, sodium gluconate and tartaric acid, and 0.6% BWOC AMPS/acrylamide copolymer. Various concentrations of an aqueous colloidal amorphous silica (CAS) suspension (30 wt.% silica, available from Univar) were added to the base slurry as shown in Table 1, and thickening times were measured at 163°C (325°F) and 103 MPa (15,000 psi).

**Table 1. Thickening times at 163°C (325°F) and 103 MPa (15,000 psi)**

| Example | 1A | 1B | 1C | 1D | 1E (Comp) |
|---|---|---|---|---|---|
| CAS (L/tonne) | - | 8.9 | 17.8 | 26.6 | 35.6 |
| Equivalent Dry CAS Concentration (% BWOC) | - | 0.32 | 0.64 | 0.96 | 1.28 |
| Thickening Time (hr:min) | 2:10 | 4:17 | 8:18 | 8:17 | 7:49 |

This example shows that the thickening times of the cement slurry were significantly longer in the presence of CAS-up to a concentration of 26.6 L/tonne. At a higher concentration (1.2% BWOC) the thickening time was slightly shorter.

### EXAMPLE 2

The base cement slurry composition was comprised of Class G cement, 35% silica flour (BWOC, 4.44 L/tonne silicone antifoam, 88.8 L/tonne mixture of sodium pentaborate and sodium ethylenediamine tetramethylene phosphonate, 0.8% BWOC blend of sodium lignosulfonate, sodium gluconate and tartaric acid, 0.5% BWOC polystyrene sulfonate and 249 L/tonne styrene-butadiene latex. Various concentrations of an aqueous CAS suspension were added to the base slurry as shown in Table 2, and thickening times were measured using at 163°C (325°F) and 103 MPa (15,000 psi).

**Table 2. Thickening times at 163°C (325°F) and 103 MPa (15,000 psi)**

| Example | 2A | 2B |
|---|---|---|
| CAS (L/tonne) | 17.8 | 26.6 |
| Equivalent Dry CAS Concentration (% BWOC) | 0.64 | 0.96 |
| Thickening Time (hr:min) | 4:02 | 7:41 |

This example is another illustration of the retarding effect of CAS at low concentrations, using a different retarder combination.

### EXAMPLE 3

The base cement slurry composition was Class G cement, 35% silica flour (BWOC), 4.44 L/tonne silicone antifoam, 0.5% BWOC blend of sodium glucoheptonate and lignin amine, 0.5% BWOC blend of sodium lignosulfonate, sodium gluconate and tartaric acid, 13.3 L/tonne polystyrene sulfonate (25 wt.% solution), and 249 L/tonne styrene-butadiene latex. Various concentrations of an aqueous CAS suspension were added to the base slurry as shown in Table 3, and thickening times were measured at 160°C (320°F) and 90 MPa (13,000 psi).

**Table 3. Thickening times at 160°C (320°F) and 90 MPa (15,000 psi).**

| Example | 3A | 3B | 3C | 3D - Is this comparative/? Thickening time went down. |
|---|---|---|---|---|
| CAS (L/tonne) | - | 8.9 | 17.8 | 26.6 |
| Equivalent Dry CAS Concentration (% BWOC) | - | 0.32 | 0.64 | 0.96 |
| Thickening Time (hr:min) | 5:49 | 16:44 | 17:23 | 16:03 |

This example shows behavior similar to that demonstrated in Example 1.

### EXAMPLE 4

The base cement slurry composition was Class G cement + 35% silica flour (BWOC) + 4.44 L/tonne silicone antifoam + 17.8 L/tonne calcium glucoheptonate + 0.5% BWOC AMPS/acrylamide copolymer. Various concentrations of an aqueous CAS suspension were added to the base slurry as shown in Table 4, and thickening times were measured at either 138°C (280°F) and 83 MPa (12,000 psi) or 160°C (320°F) and 90 MPa (13,000 psi).

**Table 4. Thickening times at 138°C (280°F) and 83 MPa (12,000 psi) or 160°C (320°F) and 90 MPa (13,000 psi).**

| Example | 4A | 4B | 4C | 4D |
|---|---|---|---|---|
| CAS (L/tonne) | - | 8.9 | 17.8 | 26.6 |
| Equivalent Dry CAS Concentration (% BWOC) | - | 0.32 | 0.64 | 0.96 |
| Thickening Time at 138°C (hr:min) | 3:05 | - | >29:30 | - |
| Thickening Time at 160°C (hr:min) | - | 6:30 | 7:36 | 5:06 - COMPARATIVE? |

The thickening time of the cement slurry formulated without CAS was short at 138°C. However, when 17.8 L/tonne CAS was added, the thickening time exceeded 29:30 (after which the test was terminated).
The thickening times at 160°C were lengthened at CAS concentrations up to 17.8 L/tonne. A shorter thickening time was observed at a higher CAS concentration.

### EXAMPLE 5

The base cement slurry composition was Class G cement + 35% silica flour (BWOC) + 4.44 L/tonne silicone antifoam + 0.7% BWOC blend of sodium glucoheptonate and lignin amine + 0.7% BWOC blend of sodium lignosulfonate, sodium gluconate and tartaric acid + 142 L/tonne styrene-butadiene latex and 35.5 L/tonne AMPS/acrylamide copolymer (10 wt.% solution).

Thickening time tests were performed at 160°C and 177°C with slurries with and without CAS present. The test pressure was 103 MPa (15,000 psi) at both temperatures. The results, shown in Table 5, demonstrate the retarding effect of the CAS.

**Table 5. Thickening times at 160°C (320°F) and 177°C (350°F) and 103 MPa (15,000 psi)**

| Example | 5A | 5B |
|---|---|---|
| CAS (L/tonne) | - | 17.8 |
| Equivalent Dry CAS Concentration (% BWOC) | - | 0.64 |
| Thickening Time at 160°C (hr:min) | 3:01 | 19:53 |
| Thickening Time at 177°C (hr:min) | 2:08 | 5:30 |

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A composition, comprising:
(i) water;
(ii) portland cement;
(iii) a retarder; and
(iv) colloidal amorphous silica, present at a concentration between 0.2% and 1.0% by weight of cement.

2. The composition of claim 1, wherein the colloidal amorphous silica has a particle size between 1 nm and 100 nm.

3. The composition of claim 1 or 2, wherein the retarder comprises one or more members selected from the group consisting of sodium glucoheptonate, lignin amine, sodium pentaborate, potassium pentaborate, calcium lignosulfonate, calcium gluconate an organophosphonate, calcium glucoheptonate, sodium lignosulfonate, sodium gluconate, sodium tartrate and tartaric acid.

4. The composition of any one of claims 1-3, wherein the retarder is a mixture of the sodium glucoheptonate and the lignin amine, and is present at a concentration between 0.1% and 2.0% by weight of cement.

5. The composition of any one of claims 1-4, wherein the retarder is a mixture of the sodium pentaborate and the organophosphonate, and is present at a concentration between 30 and 250 L/tonne of cement.

6. The composition of any one of claims 1-5, wherein the retarder is an 18 wt.% calcium glucoheptonate solution, and is is present at a concentration between 5 and 100 L/tonne of cement.

7. The composition of any one of claims 1-6, wherein the retarder is a mixture of sodium lignosulfonate, sodium gluconate and tartaric acid, and is present at a concentration between 0.1% and 2.0% by weight of cement.

8. The composition of any one of claims 1-7, further comprising styrene-butadiene latex, or a copolymer of 2-acrylamido-2-methylpropane sulfonic acid (AMPS) and acrylamide, or a combination thereof.

9. The composition of any one of claims 1-8, further comprising crystalline silica at a concentration between 20% and 100% by weight of cement.

10. A method for cementing a subterranean well, comprising:
(i) preparing a cement slurry, the slurry comprising water, portland cement, a retarder and colloidal amorphous silica, wherein the colloidal amorphous silica is present at a concentration between 0.2% and 1.0% by weight of cement; and
(ii) placing the cement slurry in the subterranean well, wherein during placement the slurry is exposed to a temperature exceeding 100°C, wherein the colloidal amorphous silica acts synergistically with the retarder, resulting in a thickening time that is longer than that which would be obtained if the retarder were present by itself.

11. The method of claim 10, wherein the colloidal amorphous silica has a particle size between 1 nm and 100 nm.

12. The method of claim 10 or 11, wherein the cement slurry further comprises crystalline silica at a concentration between 20% and 100% by weight of cement.

13. The method of any one of claims 10-12, wherein the cement slurry further comprises styrene-butadiene latex, or a copolymer of 2-acrylamido-2-methylpropane sulfonic acid (AMPS) and acrylamide, or a combination thereof.

14. The method of any one of claims 10-13, wherein the cement slurry is heated to a temperature between 100°C and 204°C during placement.

15. The method of any one of claims 10-14, wherein the cement slurry is placed during a primary cementing operation or a remedial cementing operation.
